# EUROPEAN PATENT APPLICATION

(11) **EP 2 568 266 A1**
(43) Date of publication of application: **13.03.2013**
(21) Application number: 11007382.2
(22) Date of filing: 09.09.2011
(51) Int. Cl.: G01J 1/42

(54) **Mobile UV-intensity indicator**

(71) Applicant: ETH Zurich, 8092 Zürich (CH)
(72) Inventor: The designation of the inventor has not yet been filed

(57) **Abstract**

A mobile UV-intensity indicator device (10, 60) is provided for providing updated UV information for a user (100). The device comprises a sensor unit (10) having at least one UV sensor (11, 12) for receiving UV light and generating an electric signal (21, 22) in response to an intensity of said UV light and an indicator unit (30; 60) in communication with said sensor unit (10), wherein the indicator unit (30; 60) is adapted to generate an UV sensor indication signal according to said electric signal (21, 22; 15). The indicator device (10, 60) further comprises at least one geolocation means and the indicator unit (30; 60) is adapted to generate a localised indication signal based on one or more geolocation informations received from that at least one of the geolocation means for an estimated UV solarisation information.

## Description

### TECHNICAL FIELD

The present invention relates to a mobile UV-intensity indicator for providing updated UV information for a user, comprising: a UV sensor for receiving UV light and generating an electric signal in response to an intensity of said UV light; and an indicator in communication with said UV sensor, generating an indication signal according to said electric signal.

### PRIOR ART

Overexposure to sunlight is responsible for a variety of diseases (e.g. skin cancer). To improve people's behavior (especially high-risk groups) with respect to sunlight, wearable systems to measure the UV exposure of an individual during everyday activities is known. Such a system is known from US 2004/155199 disclosing the features of the preamble of claim 1.

A further wireless embedded device for personalized ultraviolet monitoring is known from Navid Armini et al. in Amini, Matthews, Dabiri, Vahdatpour, Noshadi, & Sarrafzhadeh, 2009 "A wireless embedded device for personalized ultraviolet monitoring" In Proceedings of BIODEVICES. Porto, Portugal. Said device is a personal UV measurement device that connects to a Symbian smart phone. This system allows displaying measurements of UV radiation and the history of the measured UV radiation. Furthermore, it displays the maximal exposure time based on the specified skin type of the user, the current UV index and the applied sunscreen.

A further portable UV sensor for use in modifying patient behavior in human subjects research is presented by Michael Phan-Ba and Alex Philips in "Designing a portable UV sensor for use in modifying patient behavior in human subjects research", retrieved on 01.09.2011 from http://olivecobra.pbworks.com/w/file/26973547/report.pdf. Said real-time UV-monitoring sensor device that can be used to ensure a radiation exposure that is high enough to avoid vitamin D shortage, while limiting the risk of skin cancer. The field of application relates to coordinating with team of health care providers to determine optimal exposure levels, providing a mechanism for collecting data on patient UV radiation exposure; and providing a mechanism for goal setting, self-monitoring, and rewarding progress.

US 5,008,548 discloses a personal UV radiometer and a method for monitoring radiation dosage.

### SUMMARY OF THE INVENTION

Sunlight is a driving force for life and, amongst others due to its role in the production of vitamin D, indispensable for our health. However, long-term damage, such as premature skin aging and skin cancer are severe implications that can result from an overexposure to sunlight, even if no immediate signs of sunburn are visible. In fact, most of the nomelanoma skin cancers are associated with exposure to ultraviolet radiation. Every year, millions of persons around the globe are diagnosed with skin cancer.

Although, nearly every person is affected by the dangers of UV radiation, there are groups of persons that have a significantly increased risk of suffering from UV-induced skin cancer. These risk groups are mainly: persons taking immunosuppressive medication (such as persons with transplanted organs); persons with a skin cancer history; and persons with allergic reactions to UV light.

Until now people belonging to a high-risk group of skin cancer were informed by a dermatologist of the increased risk and that they should try to avoid exposing their skin to high UV radiation. However, as humans have no sense for UV radiation it can be very difficult to realize during the everyday life, which situations are potentially dangerous.

It is an advantage of system according to the present invention that it is able to help people to study their sun-related behavior and targets at decreasing the UV induced health risks of the persons using it.

The system comprises a wearable UV-sensor device and a software running on a personal mobile device (such as a PDA, smartphone etc.), which are wirelessly connected.

The sensor device according to the invention has several sensors that are attached to a microprocessor: A UVA sensor and a UVB sensor, that measure UV radiation; preferably an acceleration sensor and a proximity sensor that allow detecting if a person is wearing the device or not. The proximity sensor relates to the fact, if the sensor surface is or might be covered; therefore the proximity sensor is directed in the direction of the UV sensitive window. If the proximity sensor is covered, e.g. by clothes of the user, then a warning signal is issued. Furthermore, this special state can be logged and interpolated during post-processing for cumulative values and/or, replaced with estimated data from the context or a forecast based on the last registered values.

Moreover, the device exhibits a persistent memory that can buffer measurement data over a longer period of time that e.g. allows avoiding data loss when the sensor device is temporarily disconnected from the personal mobile device.

The personal mobile device runs software that processes the data collected by the different sensors and provides the main interface to the system to the individual wearing the sensor device. Said system also comprise additional sensors gathering additional contextual information (location, time, proximity, orientation, acceleration) that are used to check, monitor and improve the UV-exposition data measured by the sensor device. In fact, these additional sensors allow a better adaptation of the UV measurements to the actual situation and based on technical sensor information help the device to understand the environmental situation of the device and thus the user in question. Moreover, by means of mobile Internet access, it can forward raw or processed sensor data to a central instance (such as medical personnel, etc.) for further analysis, and receive feedback, e.g. provided by medical personnel.

The software on the smartphone does the data processing and therewith provides various functionalities, depending on the use case. Some of the most important features are:
- configure and reprogram the sensor device;
- combine sensor (UVA, UVB) data to approximate a particular action spectrum;
- configure patient-relevant data (e.g. skin type, medical history, medication, etc.);
- inform the user on current UV exposure and the cumulative UV exposure;
- inform the user on current UV exposure compared to nationwide or local UV levels (comparison with published UV index);
- inform on sun protective behaviour by interactive measurement and reporting of UV exposure in different conditions:
- educate the user on sun protective behavior by interactive feedback and comparison with peer group or own historical results;
- educate the user with specific recommendations on behaviour modification such as on use of sun screen by interactive feedback;
- inform the user on recommended daily allowance modification for nutritional supplements (such as Vitamin D);
- inform the user on needed exposure for therapeutic procedures which are light-based (e.g. daylight photodynamic therapy);
- inform the user on medical actions such as physician consultation based on e.g. cumulative or peak UV exposure;
- report pattern of behavior/exposure by reporting outdoor/indoor exposure throughout the day and provide advice to user on optimization of behavior;
- edutainment (e.g. educational game providing feedback of exposure in plain daylight, shade, near window, in back of room, such as a quiz in which user has to guess current exposure levels and is provided feedback on actual measurements);
- trigger related sun protective action such as delivery of sunscreen, reminder for sunscreen, re-minder for counseling;
- link measured data to central other medical data such as skin cancer data for motivation (showing expected decrease in personal skin cancer incidence);
- provide detailed feedback on period of highest and lowest UV exposure (such as recreational outdoor activity) to recognize and modify periods of high risk sun behavior;
- translate measured UV exposure to more tangible events such as predicted change in future skin cancer development, in future skin aging;
- differentiation of wavelengths UVA and UVB allows specific risk assessment for sun burn short-term and melanoma risk long-term (UVB) and skin aging and nonmelanoma skin cancer long-term (UVA);
- analysis of UVA/UVB ratio throughout the day for information and for modification of behaviour. e.g. assessment of current exposure for low risk of sunburn, but high risk of skin aging and nonmelanoma skin cancer (low UVB, high UVA environment); and
- inform on effect size of wearing protective clothing.

With these advantages and features, the system significantly adds to the traditional self-reporting, in which patients report their estimated sun exposure (time, intensity) to the doctor. In particular, the present system provides real-time feedback to both, the patient and the doctor, and provides much more accurate data that is not subject to misjudgments of both, sun intensity and time spent in the sun. Their properties bring significant advantage, both, in behavior training and when it comes to decide on the optimal treatment by a doctor.

Based on the preamble of claim 1, it is an object of the invention to provide a system preventing its users to suffer from overexposure to sunlight and also solves problems in the treatment of patients that already suffer from sun-related diseases.

Such a system comprises preferably a wearable sensing unit that is wirelessly connected to a personal mobile device (e.g. a smartphone) of its user having the features of: a sensor unit having at least one UV sensor for receiving UV light and generating an electric signal in response to an intensity of said UV light and an indicator unit in communication with said sensor unit. The indicator unit is adapted to generate an UV sensor indication signal according to said electric signal, wherein the indicator device further comprises at least one geolocation means and wherein the indicator unit is adapted to generate a localised indication signal based on one or more geolocation informations received from that at least one of the geolocation means for an estimated UV solarisation information.

Said indicator device as a mobile device provides geolocation information bases on maens like GPS, WiFi, GSM, 3G etc.

The invention allows avoiding damages due to sunburn as well as long-term damages caused by the ultraviolet (UV) radiation contained in the sunlight. Although a considerable fraction of people is aware of the risks originating from the sun and even though most people know about appropriate protective measures, a large fraction of the population gets sunburned from time to time. The invention provides a means to cover for the risks coming from inattention of the people and the inability to correctly assess the UV intensity which are two major reasons for excessive UV exposure and therefore for people to get sunburned.

According to an embodiment of the invention a wearable system is provided that tracks the wearer's current and accumulated sunlight exposure in real-time. This is in contrast to wearable UV dosimeters according to prior art, that are designed for offline analysis only.

Prior art systems of UV dosimeters, being primarily designed for the use in medical studies, do neither provide a direct feedback to the user, nor do they support real-time monitoring. As a consequence the intensity data can only be retrieved after a measurement series has been completed, which is in contrast to the system according to the invention that constantly transmits the sensor values to a mobile phone, and thus can directly take influence on the user's behaviour.

A mobile phone as a processing platform provides high flexibility with respect to applications. Besides the powerful post-processing possibilities, the advantages of a phone are its communication capabilities that make it a perfect gateway to transmit sensor data to servers, the permanent reachability by the user and the variety of cheap UVA and UVB sensors readily available. Mobile phones are an ideal platform for context-driven reminders and alerts, and for the use in large-scale sensing studies.

The device according to the invention provides reminders (e.g. text-messages). As overly frequent reminders are likely to be disturbing over time, the invention takes the context into account to only issue reminders when required. Such context aware reminders can be used, both, for medical scenarios and in everyday settings. For everyday settings, location- based reminders have been examined particularly well, wherein the location can be evaluated through a global positioning system, knowledge about wireless transmitter locations or other input. People are interested in and amenable to context-aware reminders.

Several usage scenarios are followed based on the technical output of the device, such as sunburn warning or long-term behavioral training with respect to sunlight exposure. Remote and self-monitoring systems in medical contexts are successful and can comprise diabetes self-care, asthma management, context-aware pill reminders and generic remote monitoring frameworks. In particular, the system according to the invention avoids user intervention for data-gathering, messages are user understandable (i.e. in laymen terms), and the system's user interface is intuitive. The sensor device according to the invention is unobtrusive, contains as few components as possible, and does not attract attention to the wearer in the public.

Following these findings, the system is able to warn its user once a critical dose of sunlight has been absorbed, and can help to improve people's awareness of the incident radiation in different situations. It thereby acts as a replacement for a missing human sense for UV radiation that could naturally warn us, similarly as our sense of smell warn us of inappropriate food.

An embodiment of the invention comprises geolocation means based on sensors for retrieving information from satellites of a global positioning system and wherein the indicator unit is adapted to evaluate the positions of said satellites of said global positioning system being near to the line of sight between the device and the sun during measurement as well as to capture the signals of said satellites being near to the line of sight between the device and the sun. Then the localised indication signal is based on a signal for the current position based, beside the value of the UV sensor signals, on a comparison between the value of a signal or it's signal-to-noise ratio of a satellite being near to the line of sight between the device and the sun and a predetermined threshold of its intended signal or of the awaited signal-to-noise ratio for the decision that the device is or is not in the direct sunlight. In other words, if the direct line of sight from the device to the a satellite of the evaluated GPS system is blocked by a building or a mountain ridge, then the sunlight is also blocked. It is thus possible to provide a better evaluation not only based on location and altitude from positioning devices but also of the 3D position of the device, especially in mountainous environments.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematical representation of a mobile UV-intensity indicator according to an embodiment of the invention;
- Fig. 2: shows a schematic overview of the system according to an embodiment of the invention as applied by a user;
- Fig. 3: shows a schematic overview of the data management of a system according to an embodiment of the invention.

### DESCRIPTION OF PREFERRED EMBODIMENTS

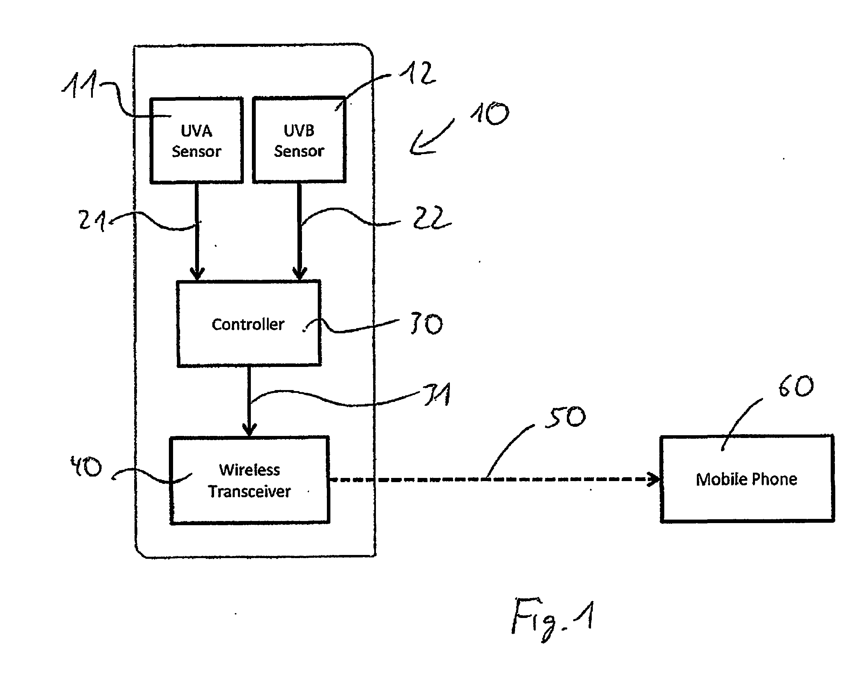

Fig. 1 shows a schematical representation of a mobile UV-intensity indicator for providing updated UV information for a user according to an embodiment of the invention. Said indicator comprises several preferably distinct parts. It comprises a sensor unit 10 for receiving UV light having preferably two UV sensors 11 and 12, generating both an electric signal 21 or 22, respectively, in response to an intensity of said UV light. The sensor unit 10, usually a handheld device comprising a fixation means (not shown in the drawings) to allow simple attachment of it to clothing or equipment of the use, further comprises a controller unit 30 being in communication with said UV sensors 11 and 12, usually a cable connection within the same housing of the sensor unit to receive as input a electric signal 21 and 22. The handheld can also be mentioned to be wearable. The controller 30 usually comprises a microprocessor adapted to fulfil a number of calculation and storage and retrieving functions. The controller 30 also comprises a memory storage means for storing raw UV data and/or. calculated data.

In fact, the controller 30 is adapted to generate an indication signal 31 according to and based upon said electric signals 21 and 22 received over time and based on additional previously obtained data as explained below.

The small sensor unit 10 that measures the UV radiation is furthermore equipped with a Bluetooth module 40. Said Bluetooth module can be of course any wireless or wirebound transceiver 40, but of course a wireless near field communication means is preferred. Such short range / short distance communication means can comprise WiFi, Zigbee, ANT and others.

The proposed system is therefore designed in a modular fashion and comprises beside the sensor unit 10 a mobile phone or smart phone 60. In fact, any electronic communication means 60 having an output means, preferably a screen for visual information and/or a loudspeaker for audible information are possible. And that electronic communication means 60 has to have an interface compatible with the wireless transceiver 40 to allow the wireless transmittal canal 50. Said communication is shown as directed into one direction. But of course, it is possible to have a bidirectional communication allowing to upload basic data to be used within the evaluation step within the controller 30, thus also using the connection 31 for a data stream in the opposite direction. It is also possible to combine the sensor unit 10 and the communication device 60 in one single unit. However, users tend to range their communication device 60 inside clothing or bags and the attachable sensor unit 10 has to be clipped or attached outside the clothing to allow free access to incoming sunlight.

The handheld device 60 is in one embodiment a smartphone 60, but can also be a PDA or a different computerized mobile device having communication interfaces. In the following description of an embodiment of the invention said device is mentioned to be a smartphone. Said smartphone 60 comprises software applications that collects and processes the sensor unit's 10 measurements. The phone 60 thereby acts as a generic processing platform, which makes the system adjustable to a wide range of applications.

The application presents the measured solar radiation data in a user-friendly manner. Moreover, it is able to notify the user of the imminent danger due to UV radiation when appropriate, thereby taking into account critical factors such as the specific skin type of the user or sunscreen applied based on corresponding input data.

To make the sensor unit 10 applicable in a variety of settings, UVA (315-400nm wavelength) and UVB (280-315nm) radiation that have different importance in different settings, are measured independently with two sensors 11 and 12. These sensors 11 and 12 can be technically identical and be covered by a filtering aid to excerpt the intended UV wavelength portions. In other embodiments it is also possible to provide three or four sensors being sensitive for a different split of the sunlight spectrum, in order to calculate a sunburn or cancer relative spectrum. In such a case the two sensors 11 and 12 are replaced by the chosen number of sensors.

For the usage scenarios within the presented embodiments, it is essential that the sensor unit 10 works reliably and provides accurate data. Independently tracking of UVA (400 nm - 315 nm) and UVB (315 nm - 280 nm) radiation allows a good approximation of the action spectrum relevant to a given application. An example is the erythema action spectrum, which describes the radiation relevant to sunburn that is absorbed by the skin. The system built in an embodiment according to the invention has been calibrated using two six hours traces recorded at the World Radiation Center in Davos, Switzerland. The comparison with the reference measurements shows that our sensor module is able to accurately measure the radiation absorbed by the skin at the position of the sensor unit 10. In separate experiments the effect of a diffuser to reduce angle dependencies was investigated. The experiments showed that the diffuser helps to approximate the angle dependent radiation absorption characteristics of the skin. Furthermore, the device has been tested with users with recordal of real-world data of a person wearing the system during a specific outdoor activity.

It is known form prior art that biological and chemical dosimeters exhibit an integral characteristic. Electronic systems, however, being based on photodiodes measure the UV intensity at a given point in time. They thus do not only provide higher flexibility with respect to post-processing, but are also well suited to creating plots of the UV intensity over time. The present embodiment uses a combination of two sensors 11 and 12 thus giving an advantage over prior art single sensor systems in view of the flexibility given by post-processing in controller unit 30 of individual UVA and UVB values 21 and 22.

In particular, the mobile device, e.g. a smartphone 60 is used as a generic platform to process and optionally forward the measured data 21, 22, and to issue notifications when appropriate. The sensor system works without direct user interaction, and the embodiment provides, besides reminders, intuitive visual feedback to the user.

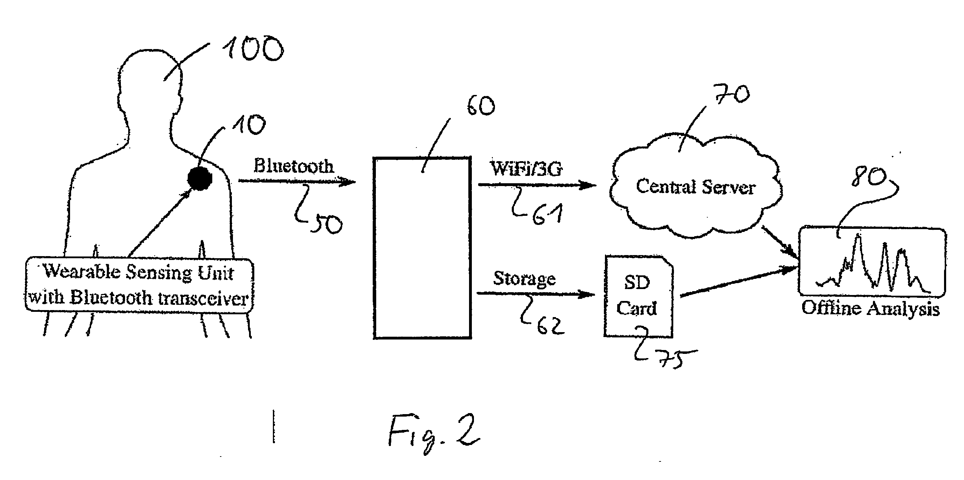

Fig. 2 shows a schematic overview of the system according to the invention as applied by a user 100. Same features in the drawings have always received the same reference numeral in the different figures. User 100 attaches sensor unit 10 preferably to its upper body, on the frontside; here in the vicinity of the left shoulder. The wearable sensing unit 10 containing UV sensors 11 and 12 is attached to a user's 100 clothes,accessories, or directly at the user's skin or body. Sensor data is transferred wirelessly over e.g. Bluetooth 50 to a smartphone 60 which serves as a graphical user interface. The wireless transmittal canal 50 connects the sensor unit 10 with the smart phone 60, which in turn can comprise further interfaces, e.g. a GSM / 3G or WiFi interface 61 to be connected with a central server 70 being represented to be reached in the cloud / internet to conduct an offline analysis 80. Such an offline analysis 80 can also be achieved after transmittal of data stored in the smart phone 60, e.g. on a storage card 75 as an SD-card, which can be reached via a storage interface 62. The storage card 75 can be read in a computer (not shown) to conduct said analysis.

The smart phone 60 is adapted to provide a warning signal once a predetermined critical dose of sunlight has been received by the sensors, and can help to improve people's awareness of the incident radiation in different situations. It thereby acts as a replacement for a missing human sense for UV radiation.

In this respect, there are specific situations which are difficult to judge for a user 100, such as windy days, sport activities in the mountains, or partially cloudy days.

The system according to the embodiment of the invention comprises two sensors UVA sensor 11 and UVB sensor 12 allow the application of specific action spectra through independent measurement of UVA and UVB intensities. This design provides maximal flexibility for the approximation of different spectra. An example is the erythema action spectrum in case of sunburn, which describes the wavelength dependent sensitivity of skin relevant to sunburn. Other examples include the action spectra for DNA damage or skin cancer. Every of these spectra can be approximated by combining specific predetermined portions of the values of the signals 21 and 22 of the UVA and UVB sensors 11 and 12, respectively.

Thus, a combination of 9% of the UV-A value and 91% of the UV-B value is used to calculate the approximate erythema action spectrum, when the sensor unit 10 comprises a UVA photodiode (Genicom GUVA-S10GD) and a UVB photodiode (Genicom GUVB-S10GD). Each of the two photodiodes gives an estimation of the current sunlight intensity in their intrinsic spectrum. Depending on the use case the device is calibrated for different spectra. Some medical applications, for example, require the measurement of UVA only. In the context of an indicator device for sunburn, the erythema action spectrum is needed, which can be approximated using a weighted linear combination of the values of the UVA and UVB sensors.

The flexibility of the system is increased, if the controller unit providing the results of the calculation is integrated within the user's 100 smartphone 60 as a generic information hub. The phone 60 can on the one hand provide further context, such as location and activity patterns, and is on the other hand used for data processing, presentation and communication. Data exchange between the sensor unit 10 and the smartphone 60 is realized with a Bluetooth wireless link 50 in real-time; said Bluetooth link can be realized with different short range communication interfaces, if preferred. An important requirement is that the system continually monitors the solar radiation to which the user 100 is exposed, even when the user 100 is temporarily not in the proximity of the phone 60. Depending on the application, the phone can either log the data, store it intermittently and present it to the user 100, or forward it to a central infrastructure, e.g., for analysis by experts such as researchers or medical personnel.

To increase awareness of radiation intensity during different activities, the system is adapted to combine solar radiation measurements from sensors 11 and 12 with context information such as the corresponding timestamp and location information from a GPS receiver integrated preferably in the mobile phone 60 but which can also be integrated in the sensor unit 10.

In a simple case, the wearable sensing unit consists of a custom made printed circuit board and a plastic enclosure. It features a TI MSP430 low-power microcontroller with 4 KBytes program flash and 512 Bytes of RAM, which is connected to a Roving Networks RN-42 low-power Bluetooth module. The sensing unit is supplied with power by a 3.7 Volt lithium-polymer rechargeable battery.

The wearable sensing unit 10 comprises of a double-sided printed circuit board. The Bluetooth module 40 and the UV photodiodes 11 and 12 are mounted on one side, e.g. the top layer, while the microcontroller 30 and the analogue circuits are provided on the other side, e.g. on the bottom layer.

Measurement of UV radiation using photodiodes 11 and 12 is accomplished with an analogue circuit. The energy of the incoming light within the active area of the photodiode 11 and 12 is converted into a small current. The magnitude of this current depends on the intensity of the light and the wavelength dependent sensitivity of the photodiode 11 and 12 with respect to the incoming light's spectrum. Since the resulting currents are very small, a transimpedance amplifier circuit is used to convert the photocurrent into a corresponding voltage, which is continually sampled using an 10-bit analog-digital converter of the microcontroller 30. Both sensors 11 and 12 can be sampled multiple times per second.

Depending on the availability of a Bluetooth connection to the user's 100 smartphone 60, measurement data is either transferred immediately to the phone 60 or buffered locally in the memory of the microcontroller 30. This helps to avoid data loss when the user 100 temporarily leaves the connection range of the phone 60. The storage capacity of the microcontroller 30 allows to store several minutes of samples at the highest resolution using a circular buffer. Furthermore, the sum of the sensor readings which have not yet been transferred to the phone are accumulated. This sum can be a weighted sum if the sampling was irregular. This assures that the total absorbed radiation can be tracked even if no Bluetooth connection is available for longer periods. However, some of the individual sensor readings are lost since they have been overwritten in the local buffer with new data.

In order to provide for prolonged battery lifetime of the sensor unit 10 for this wearable application, the sensor unit 10 is adapted for low-power operation. The analogue sensor circuit 11 and 12 and the microcontroller 30 can be put into low-power mode most of the time to reduce the overall power consumption. As a result, the biggest part of the power budget is assigned to the Bluetooth module 40. By duty-cycling the Bluetooth module 40 when connected (sniff-mode), the total current drawn of the sensor unit 10 can be reduced significantly, with today circuits to 6 mA.. However, the Bluetooth low-power mode has to be supported by both master (phone 60) and client (sensor unit 10). Given a nominal battery capacity of 110 mAh, the sensor unit 10 can be operated up to 18 hours before it has to be recharged. To prevent a sudden power failure, the battery voltage is measured continuously and displayed on the smartphone 60. The upcoming Bluetooth 4.0 low energy standard will allow to prolong the operation time of the sensor unit 10 using even smaller batteries.

Within an embodiment of the invention as described here, measurement data from the wearable sensor unit 10 is transferred over Bluetooth to a smartphone 60 running the Google Android operating system. The phone 60 runs a background service, which handles the Bluetooth communication 50 with the sensor device unit 10. The wearable sensing unit 10 is polled periodically for new sensor measurements. All sensor readings from the UVA and UVB photodiodes 11 and 12 are stored together with the corresponding timestamp and location information provided by the phone 60. These measurements are made available to the user 100 via the phone 60 in real-time. Furthermore, data is written to the phone's SD card 75 for further analysis 80. If needed, sensor readings can also be sent to a web server 70, if the phone 60 provides Wifi or 3G connectivity 61.

A considerable difference between stand-alone sensors and the present smartphone 60 based sensors system is that the data processing and displaying can be easily adapted to the needs of the use case on the smartphone based system. In the following two embodiments of user interfaces are disclosed.

The user interacts with the GUI, which visualizes measurement data and provides to adjust user specific settings such as skin type. Notifications are triggered when a user interaction is required.

The first use case is the one of a person 100 that has an outdoor job or likes to do outdoor sports and wants to avoid skin damage by UV radiation. This user is mainly interested in not being sunburned and avoiding long term skin damage. In order to assess the danger of the accumulated UV radiation to a person 100, the commonly used method of Fitzpatrick's skin typing is referred to; see F. Im, A. Eisen, K. Wolff et al. "Fitzpatrick's dermatology in general medicine" (2000). It classifies a person's skin, based on external features, such as pigmentation, tanning history, and eye colour to estimate a minimal erythema dose (MED) for that skin type. The minimal erythema dose is defined as the minimal solar radiation energy that results in a reddening of the skin, that is not induced by heat (i.e. sunburn).

The visualization may comprise a diagram informing the user 100 about the incident UV radiation he was exposed to that day. The plain energy value of the accumulated incident UV radiation in J/cm² would not be a valuable information for most users. Therefore aggregated radiation energy in terms of the percentage of the user's minimal erythema dose is displayed. As the minimal UV dose a person can be exposed to without getting a sunburn depends mainly on the skin type and the sun protection factor of the applied sunscreen, these parameters can be stored as predetermined or preset parameters in the application and are taken into account to assess the correct moment to issue a warning. When the accumulated radiation intensity exceeds 80% of the MED (multiplied with the sun protection factor of the applied sunscreen) the user 100 is warned about the acute danger of a sunburn through a notification on the phone 60.

MED values are according to the skin type and the corresponding minimal erythema dose based on Fitzpatrick's skin typing in six categories (1) to (6) as follows: (1) White, very fair skin & 20 - 35 mJ/cm; (2) White, fair skin & 30 - 45 mJ/cm; (3) Beige skin & 40 - 55 mJ/cm; (4) Beige to brown skin & 50 - 80 mJ/cm; (5) Dark brown skin & 70-100 mJ/cm; (6) Black skin & 100 mJ/cm.

To inform the user about the current radiation intensity in an easily understandable manner, the values of the UVA and the UVB radiation are not displayed on the screen of the phone 60 directly, but are combined to match the erythema action spectrum. The resulting radiation intensity is transformed into the according UV-index which is a common measure to communicate UV radiation intensity to the general public. It is defined to be the incident UV radiation irradiance in the erythema action spectrum, divided by 25 W/cm². With the present two sensors 11 and 12 the combination of 9% of the UV-A value and 91% of the UV-B value is used to match the spectrum. Preferably, the stored radiation history of the day is also shown as a bar chart hour by hour or a line diagram with exposure values for predetermined time intervals as e.g. 3, 5, 15 minutes. The idea behind such a representation is to inform the user in which situations the skin was exposed to the highest radiation intensities. This information can also be presented to the user in combination with geodata (such as on a map).

Of course it would be possible to use the unit 10 for having a display for that purpose. However, beside processing the data of the external sensors 11 and 12, the use of a smartphone 60 allows to gather more context information. For example, the control unit of the phone 60 can be adapted to fetch the UV-index forecast of the day, the present day or a day in the future and past from predetermined sources, especially from weather sites from the internet. Calendar data can also be used in this context to predict a specific behaviour of the user 100 as e.g. a general planning for weekdays vs. weekend. The predicted UV-index can be used to inform the user on time about necessary precautions, such as to take along appropriate sunscreen or clothing. It is also possible to combine the predicted UV-index, which might be published only for a specific region or place wherein the user with the phone 60 is not, with additional location knowledge as the actual altitude or position and the user may enter manually as parameter the sun protection factor (SPF) of an applied sunscreen.

In other words, sensor values for UVA and UVB are combined according to the spectrum of interest and accumulated over time of the day. Additional parameters such as the skin type or the sun protection factor of applied sunscreen can be taken into account to trigger notifications in case of a specific event, e.g., when the UV intensity exceeds a certain threshold or a critical dose relevant to sunburn has been reached. Such a notification can be solely displayed on screen or optionally also come in an audio-tactile manner. Such a notification window which is shown when the absorbed UV radiation exceeds a critical value for the specified skin type and sunscreen can be opened when the threshold exceeds e.g. 80% of the predetermined critical value or if such a threshold will be reached in a predetermined amount of time, e.g. with additional 10, 15 or 30 minutes of exposure.

The advantages of using a smartphone 60 as additional control unit are manifold. On the one hand, they are personal devices that are almost always with their user 100. On the other hand, they exhibit a variety of readily available sensors, such as 3D compass, accelerometers, GPS, light sensor, camera, and microphone, from which the user's context can be inferred. In addition, state-of-the-art smartphones 60 feature computing and communication capabilities, which provides a flexible way to process and distribute the gathered sensor data. This comprises assigning a current timestamp and location of the user as provided by the GPS to each sensor reading providing context information for the analysis of the measurement data.

Within an embodiment of the invention, the accuracy of UV measurements against reference values was checked. Secondly, the sensitivity of the sensors 11 and 12 with different incident angles of sunlight was investigated, which depends on the way the sensor unit 10 is to be used and attached to the gear of the user 100.

To ensure high accuracy of UV measurements, the sensor units 11 and 12 were calibrated against the erythema specific reference signal of the World Radiation Center (WRC) in Davos, Switzerland. For the initial measurements, the sensor devices 11 and 12 were horizontally mounted on the roof of the WRC building, next to the reference probes. It was found that the erythema specific responses measured by the high-precision reference equipment of the WRC with those of the sensor devices 10 during two days showing a good match of the sensor data with the reference curve after calibration so that the sensor unit 10 is able to accurately measure the UV radiation relevant to erythema. The first measurement was conducted during a partly cloudy day with some rain in the afternoon, and the second measurement took place during a sunny day in winter. The resulting relative error after calibration was less than 5%. The linear correction factor used for calibration is to be adapted to convert the raw UV measurements into the human readable UV index scale.

Clearly, the sensor sensitivity is dependent on the direction of the incident radiation. Ideally, the response follows a cosine curve, similarly as the response of the human skin. Unfortunately, this curve is not well matched by raw photodiodes so that a diffuser made from Polytetrafluoroethylene (PTFE) was integrated. The test showed that the use of a diffuser mitigates angle dependencies, such that the (ideal) cosine response is closely approximated. With the assumption that at 0 degrees (perpendicular to the incident sunlight) there is only diffuse radiation, the corresponding intensity value has been subtracted from the entire measurement series to account for directed light only.

The invention allows with the possibility to grasp the context of a given user 100 improving the understanding of the impact of UV radiation throughout different activities. Using time and GPS information, for example, the detected solar irradiation can be matched to a person's location. Using the phone's 3D compass, the sun's incident angle becomes known, under the assumption that the user keeps the phone in the same place on the body most of the time. Furthermore, acceleration data, microphone, etc. help to infer the user's current activity. It is important that the sensor part 10 is unobtrusively integrated into clothing and/or accessories.

It is possible to use the device in a participatory sensing activity. Then the data collected by every user 100 with his sensor unit 10 is transmitted to a combining central unit (not shown in the drawings) aiming at collecting and sharing sensor data gathered by the everyday use of these mobile devices 10, 60. In the context of UV radiation, such a combining central unit, accessible via the internet and a central server 70 large scale UV maps can be drawn at a much finer resolution than currently possible, thereby for example taking time, shadow, and reflection effects into account. Such information can possibly later be used by the device again to provide more precise estimations.

Beside the use of the unit 10 and phone 60 avoiding sunburn, it is also possible to define different high threshold or low threshold of sun exposure which had to be reached by a user 100. This relates to photodynamic therapy, UV induced immunosuppression, and the treatment of light allergies. Moreover, it could be used to support the positive effects of sunlight, for example in the production of vitamin D, circadian rhythm regulation, or seasonal affective disorder. In particular, a wearable UV sensing device as sensor unit 10 could help patients to monitor the irradiation and user activity over a longer period of time, thereby facilitating a more precise treatment at lower cost, as part of the monitoring task is shifted from the physician to the patient.

Long-term irradiation traces can further be used to improve people's awareness of sunlight intensity in different situations and are thus well suited for health related behaviour training.

A sensor according to the invention had been used within two different outdoor sport activities: snowboarding and climbing. In both experiments the incident UV radiation on a single test subject was measured over several hours.

Within the embodiment tested, three sensor units 10 were attached to the test subject: One on the helmet, facing upwards, one on the shoulder, facing upwards, and one on the chest, facing frontwards. In this test data of three sensor units 10 were captured and stored, especially in order to evaluate the impact of different positions. In a further embodiment of the invention, two or more sensor units 10 can be connected with the smart phone 60 wherein the control unit in said smart phone 60 or portable electronic device is adapted to combine the data of the different sensors into one single UV related value for the user 100.

Beside the UV intensity values the location of the person 100 was tracked using GPS within the smart phone 60. The location and the UV data was logged on the mobile phone 60 carried by the person 100. From the location, an elevation profile was derived along with the plot of the measured UV radiation of the three sensor units.

The role of the sensor placement, i.e. where a user 100 is wearing the sensing unit 10 was less important than the amount of clouds affecting the overall UV intensity. It only plays a minor role for the proportions of sunlight absorbed by different sites of the body. There are high and relatively stable values for measurements on the shoulder, i.e. attachment of the sensor unit 10 there, for different outdoor occupations, namely gardener, roof carpenter, bricklayer. The reported values show that roughly 70% of the total radiation, as measured by a horizontally placed dosimeter, is received at the shoulder, which is slightly less than the doses measured at the vertex of the head. Moreover, under lightly cloudy weather conditions, the incident radiation at the chest is stated to be about two thirds of the radiation measured at the shoulder.

The sensor unit 10 has been applied for recording UC measurements for a snowboarding user 100. There the measured intensity ratios of the three sensors (on the head, shoulder and chest) differ significantly; in particular, the sensor mounted on the chest absorbed about 10% more energy than the sensor mounted on the head. These differences can, presumably, be explained by the low position of the sun during winter days and the substantial amount of UV reflection by the snow.

Presence of snow is also a contextual information which can be taken into account. The same is true for water surfaces as lakes or the sea.

It was also clear from the testes that UV intensity versus altitude of the test subject 1.00 during the descent on a long ski slope changed so that the correlation of altitude over mean sea level and UV radiation is clearly visible.

Another measurement series were conducted during one day of climbing on a sunny spring day. A sensor unit 10 was attached at the climber's harness, which measured the incident sun radiation on the back of the test person 100. The UV forecast of the national meteorological institute for that day was UV index 5. The radiation was high enough to exceed the minimal erythema dose for skin type 1 and skin type 2. Therefore, the control unit within phone 60 would have accumulated the necessary data of accumulated UVA/UVB radiation to emit a warning to a person with skin type 1 around 2 pm about the high radiation energy (traversing a threshold of 80\% of the MED), which would have allowed the person 100 to apply sunscreen, or seek shadow in time. Similarly, a person with skin type 2 would have been warned around 40-minutes later when the threshold was reached, which again would have been early enough to take precautions.

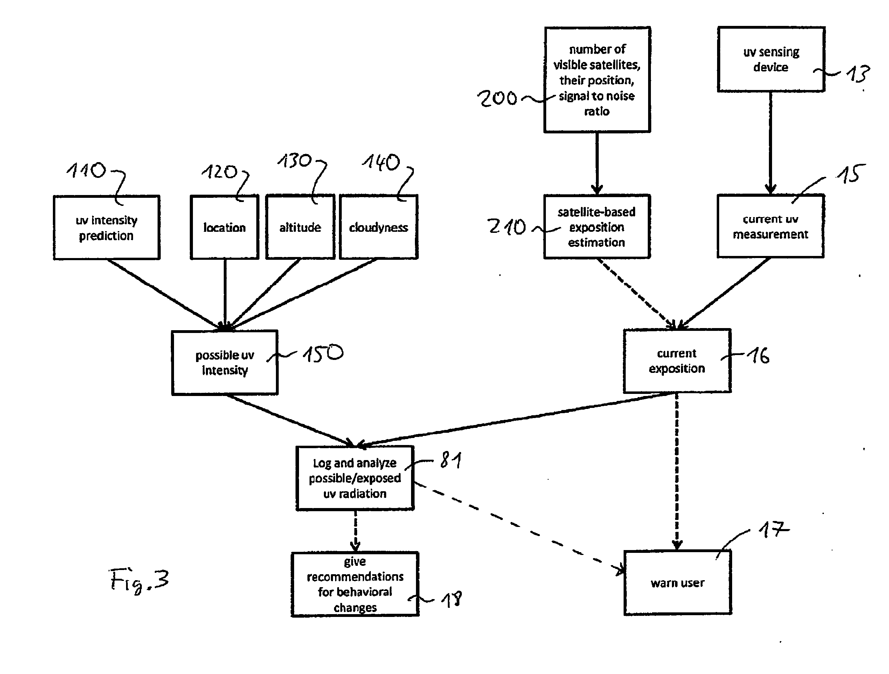

Fig. 3 shows a schematic overview of the data management of a system according to an embodiment of the invention. Therefore said drawing reflects the data flow within the sensor unit 10 and especially within the smart phone or portable electronic communications apparatus 60.

The portable electronic communications apparatus 60 is adapted to obtain data for the UV intensity prediction 110, which can be the publicly available UV index, preferably automatically retrieved from a corresponding database or manually entered and stored by the user 100. Furthermore the location 120 and the altitude 130 as well as the cloudiness 140 are obtained and stored. The location 120 can be calculated based on the information gathered from a GPS sensor or approximated through identification of radio cells (3G, Wifi etc.). Such data (possibly in conjunction with map data) can be used to calculate the altitude 130 or a barometer can be used for this. A cloudiness 140 value can be derived from live data or forecasts of terrestrial weather stations and meteorological satellites.. This information is assembled to predict a possible UV intensity 150 during a day for each predetermined fraction of the day, i.e. calculated for 5, 10, 15, 30 minute intervals. These intervals can vary over the day, they can be longer during slowly changing conditions (no movement of the user 10, small change of angle of incidence during mid-day hours of the sun); they can be made shorter when the user is changing the altitude quickly, switches between inside and outside locations or when the cloudiness changes.

On the other side, the UV sensing device 13, being e.g. a combination of the UVA and UVB sensors 11 and 12, respectively, provide a current UV measurement 15 which is quite accurate for the total exposition, if the sensor unit 10 is worn near a shoulder of the user 100. It can also be calibrated for different attachment positions. This current UV measurement 15 allows to deliver the current exposition.

Within a further embodiment of the invention, which can be combined with the calculation of the possible UV intensity 150 or which can be provided as stand-alone feature together with the sensing device 13, the current exposition 16 is estimated via a satellite-based exposition estimation 210. Said estimation is based on the number of visible satellites, especially their position near the sun and the relative signal-to-noise ratio.

So-called global positioning systems (GPS) are satellite based. This is also true for the intended further systems Galileo or GLONASS. A certain number of satellites are necessary to determine the present situation. There are satellites which are, at a given time during a day, positioned near the sun in the sense that they are positioned in or near the line of sight of the sun. For example in mountainous regions, it is possible that the user cannot trace a direct line of sight with the sun, since the sun is hidden by a mountain or ridge. The same is true for the user being in a city or a forest. In such a case the microprocessor within the electronic device 60, receiving data from the GPS sensors, would evaluate and know positions of any specific satellite which has a temporary position near the sun. If the measured data from the GPS sensors would not provide a strong signal for such a satellite or would provide only a fading signal with a poor signal-to-noise ratio (see below) then the electronic device 60 is adapted to conclude that the user 100 is not exposed to direct sun light, although, in a flat country, the sun would be visible above the horizon. The same estimation is applicable, when the user 100 is shrouded by the shadow of buildings. Thus the possible UV intensity estimation 150 can be directly corrected or replaced through a measured estimation 210 which can directly be input to the current exposition figure 16, even instead of the sensor 13 data. The absence of the signal of a satellite in the line of sight of the sun or a poor signal-to-noise ratio of a signal of such a satellite can be detected based on a comparison of an expected value and the measured value against a threshold, which can be determined based on the general signal level at the time of the check. Moreover, a general dependency of the incident UV radiation from the signal-to-noise ratio and the general signal level can be learned or precalibrated.

The data relating to the UV intensity estimation 150 and the current exposition 16 data are input to the card storage 75 for immediate or later analysis 81. They can also be used directly or based on integrated values of stored data to emit a warning 17 for the user 100 or to give recommendations 18, if a specific exposure is stored e.g. each day for consecutive or nearly consecutive days. Such an unfavourable behaviour could be waiting for public transportation means at the same location 120 or time without using a shelter; taking lunch outside without sun protection etc..

### LIST OF REFERENCE SIGNS

- 10: sensor unit
- 11: UVA sensor
- 12: UVB sensor
- 13: UV sensing device
- 15: UV measurement
- 16: current UV exposition
- 17: warning to user
- 18: recommendation
- 21: electric signal UVA
- 22: electric signal UVB
- 30: controller
- 31: indication signal
- 40: wireless transceiver
- 50: wireless transmittal canal
- 60: mobile phone
- 61: wireless interface
- 62: storage interface
- 70: central server
- 75: storage card
- 80: analysis computer
- 81: logging and analysis
- 100: user
- 110: UV prediction
- 120: location information
- 130: altitude
- 140: cloudiness
- 150: possible UV intensity
- 200: visible satellites
- 210: satellite based estimation

## Claims

1. A mobile UV-intensity indicator device (10, 60) for providing updated UV information for a user (100), comprising: a sensor unit (10) having at least one UV sensor (11, 12; 13) for receiving UV light and generating an electric signal (21, 22; 15) in response to an intensity of said UV light and an indicator unit (30; 60) in communication with said sensor unit (10), wherein the indicator unit (30; 60) is adapted to generate an UV sensor indication signal (17) according to said electric signal (21, 22; 15), **characterized in that** the indicator device (10, 60) further comprises at least one geolocation means (200; 120; 130) and wherein the indicator unit (30; 60) is adapted to generate a localised indication signal (17) based on one or more geolocation informations received from that at least one of the geolocation means (200; 120; 130) for an estimated UV solarisation information.

2. The device according to claim 1, wherein at least one geolocation means (200; 120; 130) is a global positioning receiver or an altimeter obtaining location and/or altitude information.

3. The device according to claim 1 or 2, comprising a wireless communication interface, wherein the geolocation means (200; 120; 130) comprises a control unit adapted to retrieve location information through location information from adjacent wireless communication base stations, wherein optionally the interface is a Wifi or 3G interface.

4. The device according to any one of claims 1 to 3, wherein the device (10, 60) comprises one or more accelerometer sensors for detecting that the device (10, 60) is worn by a user (100).

5. The device according to any one of claims 1 to 4, wherein the sensor unit (10) and the indicator unit (30; 60) are separate items, comprising each a wireless interface for communication (50); especially wherein the indicator unit (30; 60) being a pager, a cellular phone, a personal digital assistant (PDA) or a handheld computer.

6. The device according to claim 5, wherein the wireless interface for communication (50) is a Bluetooth or other short distance wireless interface.

7. The device according to any one of claims 5 or 6, wherein two or more separate sensor units (10) are provided to be positioned in a different spatial and orientational relationship one to the other and (possibly) to the indicator unit (30, 60) to obtain different light exposure for their respective UV sensors (11,12; 13), wherein the indicator unit (30, 60) is adapted to combine the data of the different UV sensors (11, 12; 13) into one single UV related value for the user (100).

8. The device according to any one of claims 1 to 7, wherein the sensor unit (10) comprises two or more UV sensors (11, 12) having different sensibility for different wavelength intervals in the UV region, preferably a first sensor (11) for the UV-A and a second sensor (12) for the UV-B region, wherein the device further comprises a control unit (30), adapted to calculate a corresponding UV-index value based on the current UV-A and UV-B sensor signals (21, 22), wherein optionally the UV-index value is based on the approximate erythema action spectrum.

9. The device according to any one of claims 1 to 8, wherein each sensor unit (10) comprises at least a proximity sensor directed in the direction of the UV sensor surface, wherein the indicator unit (30, 60) is connected to the proximity sensor and is adapted to switch to a cover mode, if one or more of the proximity sensors is covered, said mode comprising actions from the group of logging the present state and the last measured values, issuing a warning signal, replacing measured values by estimated exposition values, either during the time of said cover mode or during post-processing.

10. The device according to any one of claims 1 to 9, wherein said indication signal (17) is a visible signal or an audible signal indicating, when a value of said electric signal (21, 22; 15) exceeds a predetermined threshold.

11. The device according to any one of claims 1 to 10, wherein said indication signal (17) is a tangible signal, especially wherein said indicator is a vibrator, when a value of said electric signal (21, 22; 15) exceeds a predetermined threshold.

12. The device according to any one of claims 1 to 11, wherein the geolocation means (200; 120; 130) comprises sensors for retrieving information from satellites of a global positioning system and wherein the indicator unit (30; 60) is adapted to evaluate (200) the positions of said satellites of said global positioning system being near to the line of sight between the device and the sun during measurement as well as to capture the signals of said satellites being near to the line of sight between the device and the sun, wherein the localised indication signal (17) is based on a signal for the current position (16) based, beside the UV sensor signals (21, 22; 15), on a comparison between the value of a signal or it's signal-to-noise ratio of a satellite being near to the line of sight between the device and the sun and a predetermined threshold of its intended signal or of the awaited signal-to-noise ratio for the decision that the device (10) is or is not in the direct sunlight.
